# EUROPÄISCHE PATENTSCHRIFT

(11) **EP 0 955 123 B1**
(45) Veröffentlichungstag und Bekanntmachung des Hinweises auf die Patenterteilung: **29.10.2003**
(21) Anmeldenummer: 99106995.6
(22) Anmeldetag: 09.04.1999
(51) Int. Cl.: B23Q 1/00, F16L 27/08

(54) **Vorrichtung zum Überführen eines Fluids**
Device for fluid conveyance
Dispositif pour le transfert d un fluide

(30) Priorität: 07.05.1998 DE 19820362
(43) Veröffentlichungstag der Anmeldung: 10.11.1999
(73) Patentinhaber: GAT Gesellschaft für Antriebstechnik mbH, 65201 Wiesbaden (DE)
(72) Erfinder: Ott, Stephan, 65201 Wiesbaden (DE)
(74) Vertreter: Lieke, Winfried, Dr.

(56) Entgegenhaltungen:
- DE-A- 3 136 147
- DE-A- 19 632 472
- US-A- 4 957 398

## Beschreibung

Die vorliegende Erfindung betrifft eine Vorrichtung zum Überführen eines Fluids von einem stehenden in ein drehendes Maschinenteil mittels einer Drehdurchführung, die wahlweise radiale ebene, konische oder zylindrische Übergangsflächen aufweist, wobei am drehenden Maschinenteil eine sich mit diesem drehende Zugstange für die Hindurchleitung des Fluids vorgesehen ist, welches sich bis in den Bereich der Drehdurchführung erstreckt und welches bezüglich der Drehdurchführung axial verschiebbar ist.

Eine entsprechende Vorrichtung ist aus der europäischen Patentanmeldung EP-A-0 860 231 bekannt, die ein Dokument im Sinne von Art. 54(3) EPÜ ist. Bei dieser bekannten Vorrichtung ist eine zweifache Drehdurchführung für die Zufuhr zweier getrennter Fluide vorgesehen, wobei eine zentrale Zufuhr ausschließlich in axialer Richtung erfolgt und wobei die Übergangsflächen in einer radialen Ebene liegende Gleitdichtflächen geringen Durchmessers sind, während eine zweite Fluidzufuhr im Abstand zu den Übergangsflächen der zentralen Fluidzufuhr in radialer Richtung von außen nach innen erfolgt. Dementsprechend ist an dem drehenden Maschinenteil ein zentrales, doppelwandiges Rohr vorgesehen, dessen Innenrohr mit dem zentralen Fluidzuführungskanal der Drehdurchführung verbunden ist, während das Außenrohr mit den radialen Zufuhrkanälen der Drehdurchführung verbunden ist. Speziell ist die in der EP-A-0 860 231 beschriebene Vorrichtung für eine sogenannte Minimalmengenschmierung vorgesehen, bei welcher zentral eine sehr geringe Menge an Öl in eine nahe eines Werkzeugkopfes vorgesehene Mischkammer einer Werkzeugmaschinenspindel zugeführt wird, während koaxial und radial außerhalb hierzu eine Luftzufuhr erfolgt. Die Durchmischung von Luft und Öl erfolgt unter Bildung eines feinen Ölnebels in der Mischkammer in unmittelbarer Nähe der Werkzeugaufnahme der Spindel, und diese Mischung wird dann durch entsprechende Bohrungen in einem Werkzeug in den Arbeitsbereich des Werkzeuges geführt. Dabei werden nur äußerst geringe Mengen an Öl, jedoch vergleichsweise große Mengen an Luft zugeführt. Gleichzeitig muß die Zuführung des Ölnebels in den Arbeitsbereich eines Werkzeuges, wie z.B. eines Bohrers oder Fräsers, sehr gleichmäßig ohne Unterbrechung und in Form sehr kleiner und gut verteilter Öltröpfchen erfolgen, damit trotz einer minimalen Ölzufuhr dennoch eine ausreichende Schmierung und eine entsprechende Herabsetzung der bei der Werkstückbearbeitung auftretenden Reibung verhindert wird. Ansonsten würde die entstehende Reibungswärme sehr schnell zur Zerstörung des Werkzeuges führen. Dies gilt um so mehr, als tendenziell Werkzeuge und Werkzeugmaschinen mit immer höheren Drehzahlen zum Einsatz kommen. Dabei hat diese sogenannte Minimalmengenschmierung den Vorteil, daß im Gegensatz zu der herkömmlichen und weit verbreiteten Verwendung einer Ölemulsion nur sehr geringe Mengen an Schmiermittel anfallen. Die bisher verwendeten Emulsionen müssen dagegen mit relativ aufwendigen Mitteln aufgefangen, mindestens grob gereinigt und entsorgt oder für den erneuten Gebrauch wiederaufbereitet werden.

Die vollständige Trockenbearbeitung ohne jedes Schmiermittel ist nur bei niedrigen Drehzahlen oder bei geringen Materialabtragsraten verwendbar, und bei einer solchen Trockenbearbeitung ist selbstverständlich keine Fluidzufuhr durch eine Werkzeugmaschinenspindel und das Werkzeug erforderlich, so daß diese Art der Bearbeitung hier außer Betracht bleiben kann.

Bei der Minimalmengenschmierung besteht, wie bereits erwähnt, das Problem einer konstanten und gleichmäßigen Zufuhr eines stets gleichbleibenden Ölnebels in den Arbeitsbereich des Werkzeuges, was unter anderem der Grund dafür ist, daß eine entsprechende Mischkammer zur Herstellung des Ölnebels in den unteren Bereich der Spindel in die Nähe der Werkzeugaufnahme verlegt worden ist, um erst dort den Ölnebel zu erzeugen, damit möglichst keine Veränderung, wie z. B. eine Tröpfchenabscheidung oder Tröpfchenagglomeration, auf dem verbleibenden Weg zur Arbeitsfläche des Werkzeuges mehr stattfinden kann.

Die dafür benötigten Ölmengen liegen z. B. in der Größenordnung von 20 ml pro Stunde. Die Versorgungsaggregate und die zentralen Zufuhrleitungen ebenso wie die zentrale Drehdurchführung sind entsprechend klein dimensioniert. Hinsichtlich der Drehdurchführung hat dies außerdem den Vorteil, daß Gleitdichtflächen von relativ geringem Durchmesser verwendet werden können, so daß die mit der Drehdurchführung bzw. der Werkzeugmaschine insgesamt gefahrenen Spindeldrehzahlen sehr hoch sein können und dennoch die Dichtigkeit und Funktionsfähigkeit der zentralen Drehdurchführung gewährleistet bleibt.

Bei Werkzeugmaschinen, bei denen der Werkzeugwechsel automatisch hydraulisch oder pneumatisch erfolgt, wird üblicherweise eine zentrale Zugstange verwendet, die sich in axialer Richtung bewegt, um entsprechende Halte- und Klemmelemente an der Werkzeugaufnahme der Werkzeugmaschinenspindel zu betätigen. Typischerweise ist eine solche Zugstange durch ein Paket von Federn in Spannrichtung der Werkzeugaufnahme vorgespannt, und die hydraulische oder pneumatische Betätigung führt zu einer axialen Bewegung der Zugstange entgegen der Federkraft, durch welche das Werkzeug aus der Spannvorrichtung gelöst wird.

Um gleichzeitig die Fluidzufuhr als auch eine entsprechende Zugstangenbetätigung an der Spindel einer Werkzeugmaschine vorsehen zu können, ist in der Zugstange selbst ein entsprechender Überführungskanal ausgebildet, d.h. die Zugstange selbst hat die Form eines Rohres, welches gleichzeitig als zentraler Zuführkanal dient. Beim Vorsehen verschiedener Fluidkanäle ist dementsprechend die Zugstange im allgemeinen ein mehrwandiges Rohr, so daß die Zahl der Zufuhrkanäle entsprechend vergrößert wird. Der Begriff "Zugstange" soll jedoch im Rahmen der vorliegenden Anmeldung nicht auf die vorstehend erläuterte Bedeutung beschränkt sein, sondern umfaßt generell jedes rohrförmige Element, durch welches Fluid von einer Drehdurchführung oder zu einer Drehdurchführung hindurchgeleitet werden kann und welches darüber hinaus gegenüber der Drehdurchführung bzw. den Gleitdichtflächen der Drehdurchführung axial verschiebbar ist.

Bezüglich der zentralen Fluidzuführung tritt dabei allerdings das Problem auf, daß sich das Volumen in dem gesamten Zuführungskanal von der Drehdurchführung bis zum unteren Ende dieses Kanales allein durch die axiale Bewegung des zentralen Rohres verändert. Da sich der Durchmesser der Zufuhrkanäle nicht verändert, wohl aber die effektive Länge aufgrund der axialen Bewegung dieses Rohres in der Drehdurchführung, ändert sich das Volumen um einen Betrag, der dem Querschnitt des zentralen Zufuhrkanales multipliziert mit dem axialen Verschiebungsweg des zentralen Rohres entspricht. Während dies kein Problem darstellt, solange der entsprechende Zufuhrkanal nach einem oder beiden Seiten hin offen ist, können jedoch erhebliche Probleme dann auftreten, wenn der Zufuhrkanal an beiden Enden geschlossen ist. Im Falle der Minimalmengenschmierung ist ein entsprechender Verschluß am unteren Ende des Zufuhrkanals durch die Mischkammer bzw. ein entsprechendes Eingangsventil im Bereich der Mischkammer gegeben. Am anderen Ende wird selbstverständlich während eines Werkzeugwechsels, währenddessen auch die Axialbewegung der Zugstange bzw. des zentralen Rohres erfolgt, auch die zentrale Ölzufuhr gestoppt. Die plötzliche Lösebewegung der Zugstange bzw. des zentralen Zufuhrrohres, die im allgemeinen in der Richtung erfolgt, daß das effektive Volumen des zentralen Zufuhrkanals vergrößert wird, kann dann zu einem plötzlichen Unterdruck in diesem Kanal führen, so daß hierdurch entweder Luft durch Lecks angesaugt wird oder aber das darin enthaltene Öl teilweise entgast. Dies bedeutet, daß in dem Ölzufuhrkanal Luftblasen entstehen, wodurch es zu Unterbrechungen bei der Herstellung eines Ölnebels in der Mischkammer kommen kann. Dies kann sehr schnell zu erheblichem Werkzeugverschleiß führen.

Aber auch in anderen Anwendungsfällen, bei welchen ein zentraler Fluidzufuhrkanal vorgesehen ist, können die mit der Spann- bzw. Lösebewegung der als Überführungsrohr ausgebildeten, zentralen Zugstange verbundenen Druckstöße zu Betriebsstörungen oder Beschädigungen einzelner Komponenten führen. Insbesondere können Leckagen entstehen und Dichtflächen beschädigt werden.

Weiterhin ist eine ähnliche Drehdurchführung aus der DE 196 32 472 bekannt, bei der in einer Spindelvorrichtung für eine Werkzeugmaschine zwei Zufuhrpfadsysteme zum getrennten Einleiten von Luft und Flüssigkeit in eine Spindel vorgesehen sind.

Gegenüber diesem Stand der Technik liegt der vorliegenden Erfindung die Aufgabe zugrunde, eine Vorrichtung mit den eingangs genannten Merkmalen zu schaffen, bei welcher eine Volumenänderung in dem zentralen Zufuhrrohr während einer Spann- bzw. Lösebewegung der Zugstange, die aus dem zentralen Zufuhrrohr besteht oder dieses enthält, vermieden wird.

Diese Aufgabe wird dadurch gelöst, daß der drehenden Übergangsfläche der Drehdurchführung ein Rohrabschnitt zugeordnet ist, welcher mit radialem Spiel koaxial zur Zugstange des drehenden Maschinenteils angeordnet ist und mit diesem in axialer Richtung um einen Betrag überlappt, der größer ist als die im Gebrauch der Vorrichtung maximal auftretende Axialverschiebung der drehenden Zugstange relativ zum mitdrehenden Rohrabschnitt, wobei das radial äußere der beiden Rohrelemente in seiner Wand im wesentlichen axial verlaufende Überführungskanäle hat und wobei das innere der beiden Rohrelemente an seinem mit dem äußeren Rohrelement überlappenden Ende geschlossen ist, daß in dem Überlappungsbereich zwei Dichtungen zwischen Zugstange und Rohrabschnitt in einem axialen Abstand zueinander vorgesehen sind, der ebenfalls größer ist als die erwähnte, maximale relative Axialverschiebung, daß im Bereich zwischen den Dichtungen sowohl der Rohrabschnitt als auch die Zugstange je mindestens eine Bohrung aufweisen, und zwar für den Hindurchtritt des Fluids entweder von den Kanälen des radial äußeren Rohrelementes oder von dem zentralen Lumen des inneren Rohrelementes in den zwischen diesen Rohrelementen durch das radiale Spiel gebildeten Zwischenraum und von dort in das jeweils andere rohrförmige Teil bzw. den Überführungskanal desselben.

Die Zugstange bzw. das Rohr und der Rohrabschnitt werden hier im Sinne eines Oberbegriffs jeweils auch als Rohrelement bezeichnet. Dadurch, daß nunmehr das im Überlappungsbereich befindliche Ende des inneren Rohrelementes geschlossen ist, wird ein axial durchgehender, zentraler Überführungskanal vermieden. Stattdessen wird zwischen den Wänden zweier Rohrelemente ein Zwischenraum geschaffen, der in beiden axialen Richtungen durch Dichtungen abgegrenzt ist, und die Rohrelemente weisen jeweils radiale Bohrungen in diesem Bereich auf, so daß Fluid von dem einen in den Zwischenraum und von dort in das andere übertreten kann. Die Rohrelemente sind relativ zueinander in axialer Richtung bewegbar, wobei die radialen Bohrungen der beiden Rohrelemente immer innerhalb des durch die Dichtungen begrenzten Zwischenraumes zwischen dem inneren und dem äußeren Rohrelement verbleiben. Dabei kann entweder der an der Drehdurchführung vorgesehene Rohrabschnitt radial innerhalb des Rohres des drehenden Maschinenteils liegen oder umgekehrt liegt der an der Drehdurchführung vorgesehene und der mitdrehenden Dicht- bzw. Übergangsfläche der Drehdurchführung zugeordnete Rohrabschnitt radial außerhalb eines dünneren, zentralen Rohres, welches an dem drehenden Maschinenteil vorgesehen ist und sich in den Rohrabschnitt der Drehdurchführung erstreckt. Diese letzte Variante ist bevorzugt und wird im folgenden für die Beschreibung weiterer bevorzugter Merkmale überwiegend zugrundegelegt, wobei diese Merkmale ohne weiteres analog auf die umgekehrte radiale Anordnung (Rohrabschnitt radial innen und Rohr bzw. Zugstange radial außen) zu übertragen sind. Das jeweils radial äußere dieser Rohrelemente weist in seiner Wand axiale Überführungskanäle auf, die über die radiale Bohrung im Bereich zwischen den Dichtungen mit dem Zwischenraum zwischen dem inneren und dem äußeren Rohrelement in Verbindung stehen.

Eine Verschiebung des radial inneren gegenüber dem radial äußeren Rohrelement bewirkt nun lediglich, daß sich die beiden Radialbohrungen in dem Zwischenraum zwischen den Dichtungen in axialer Richtung relativ zueinander verschieben, ohne daß sich an dem Volumen des zentralen Rohres, das ja an seinem in den Rohrabschnitt hineinragenden Ende verschlossen ist, irgendetwas ändert. Gleichzeitig ändert sich aber auch nichts an dem Volumen des Zwischenraumes und der in den Wänden des äußeren Rohrelementes vorgesehenen Überführungskanäle, da dieses Volumen nicht von dem sich relativ hierzu bewegenden zentralen Rohr beeinflußt wird. Es ändern sich lediglich die Wandabschnitte, welche die Innenwand bzw. die Außenwand des Zwischenraumes zwischen dem inneren und dem äußeren Rohrelement bilden, da sich die eine dieser zylindrischen Wände relativ zu der anderen und relativ zu den Dichtungen, die zweckmäßigerweise an einer dieser beiden Wände festgelegt sind, damit sie ihren festen axialen Abstand beibehalten, verschiebt.

Der zentrale Hohlraum des Rohrabschnittes, soweit er nicht den erwähnten Zwischenraum begrenzt, definiert dabei lediglich ein Aufnahmevolumen für das freie Ende des zentralen Rohres, steht jedoch nicht mit dem Überführungsvolumen in Verbindung. Insbesondere kann dieser zentrale Hohlraum auch mit der äußeren Umgebung verbunden sein, so daß hierdurch eine Druckentlastung stattfinden kann, was auch die Dichtungen entlastet, die den Zwischenraum begrenzen.

In der bevorzugten Ausführungsform der Erfindung, bei welcher der Rohrabschnitt an der Drehdurchführung angeordnet ist und sein Innendurchmesser größer ist als der Außendurchmesser des Rohres bzw. der Zugstange, welches sich mit dem drehenden Maschinenteil dreht und sich in den Rohrabschnitt der Drehdurchführung abgedichtet hinein erstreckt, ist außerdem vorgesehen, daß dieses Innenrohr des drehenden Maschinenteils axial außerhalb des Überlappungsbereiches mit dem Rohrabschnitt der Drehdurchführung von einem Außenrohr koaxial umgeben und mit diesem verbunden ist. Zwischen Innen- und Außenrohr wird dann ein weiterer Zufuhrkanal für ein zweites Fluid definiert. In dieser Form ist die Vorrichtung besonders in Verbindung mit der sogenannten Minimalmengenschmierung geeignet.

Das Außenrohr hat außerdem in der bevorzugten Ausführungsform der Erfindung einen auf seiner Außenfläche gleichmäßig sechskantig ausgebildeten Abschnitt. Vorzugsweise bilden Innen- und Außenrohr einen Teil der Spindel einer Werkzeugmaschine und insbesondere deren Zugstange für eine pneumatische oder hydraulische Betätigung eines Spannfutters.

Der an der Drehdurchführung vorgesehene Rohrabschnitt, welcher das Innenrohr umfaßt, kann außerdem so ausgebildet sein, daß er mit einem weiteren Abschnitt auch das Außenrohr umfaßt und darüber hinaus auch mit einer Innensechskantfläche mit der Außensechskantfläche an dem Außenrohr des drehenden Maschinenteils in Eingriff treten kann, ist der Rohrabschnitt des drehenden Maschinenteiles vorzugsweise aus mehreren Teilen zusammengesetzt.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: einen Axialschnitt durch eine Drehdurchführung,
- Figur 2: die als doppelwandiges Rohr ausgebildete Zugstange einer Werkzeugmaschine, die in die Drehdurchführung nach Figur 1 einsetzbar ist,
- Figur 3: eine Draufsicht der Zugstange gemäß Figur 2 in Richtung des Pfeiles "X",
- Figur 4: die Zugstange in einer ersten Endposition (Werkzeugwechsel) in einer Drehdurchführung gemäß Figur 1 und
- Figur 5: die Zugstange in einer zweiten Endposition (Werkzeug gespannt) in einer Drehdurchführung gemäß Figur 1.

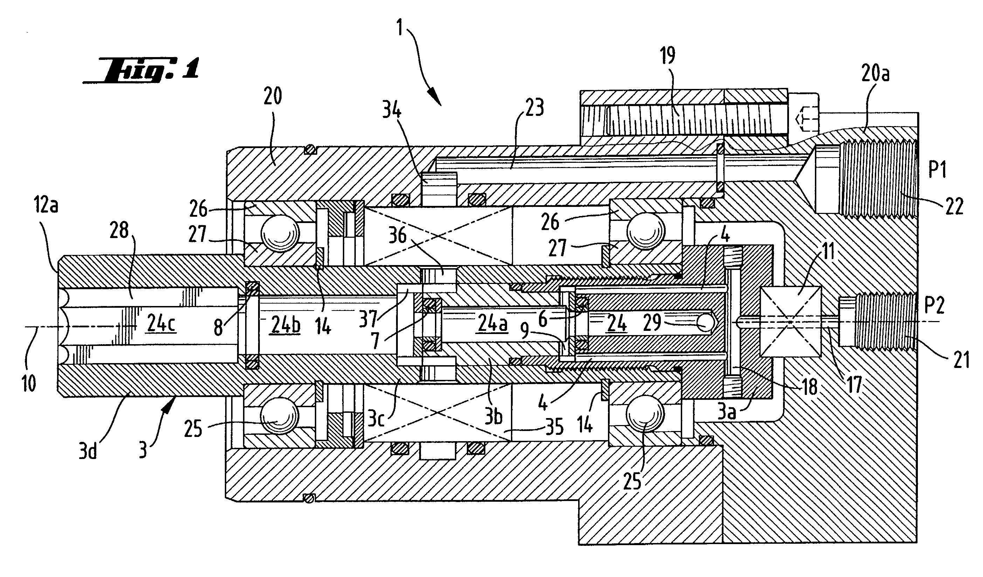

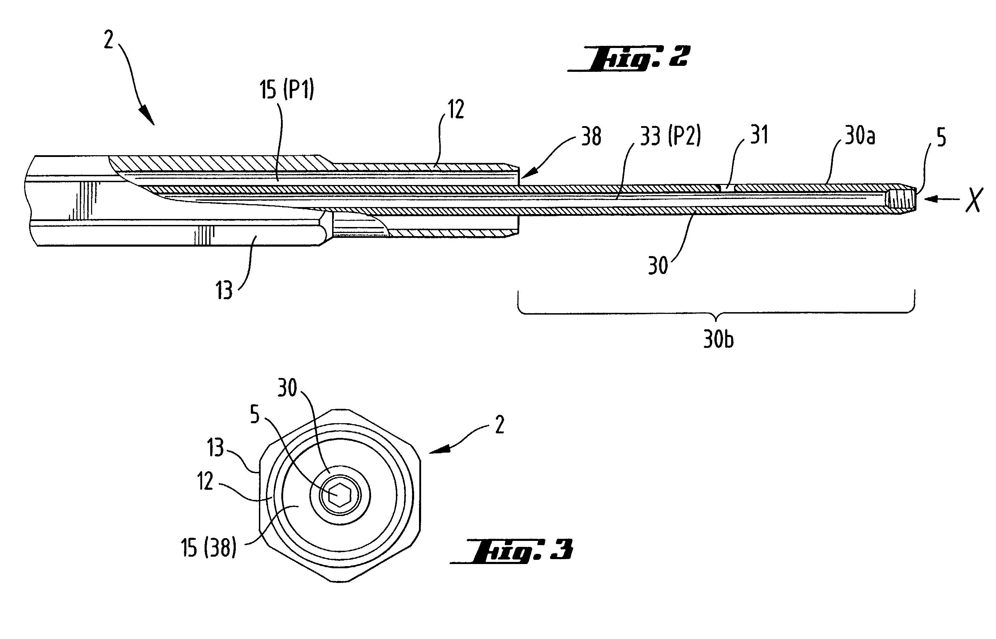

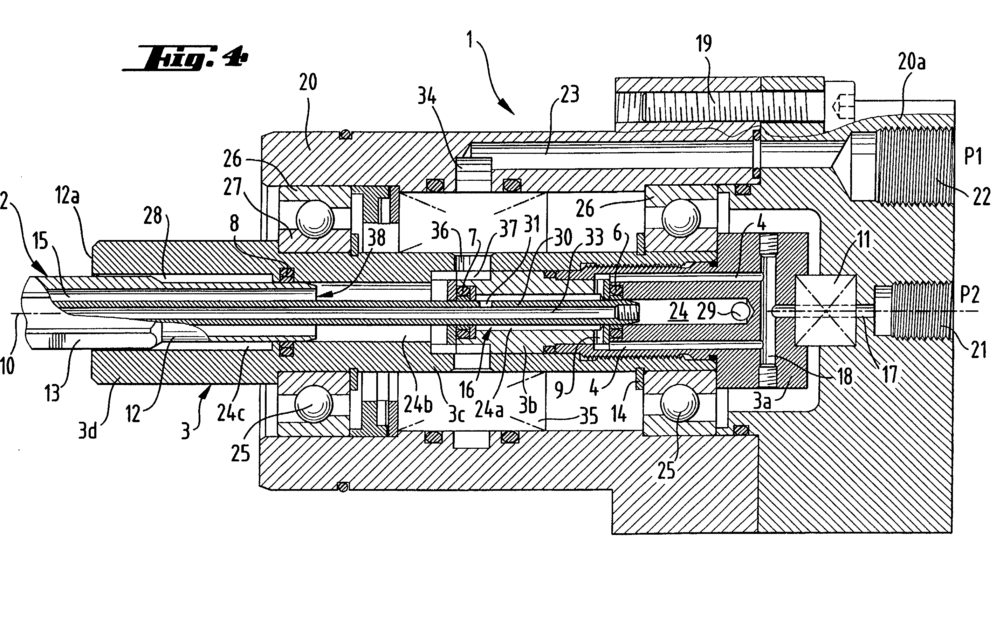

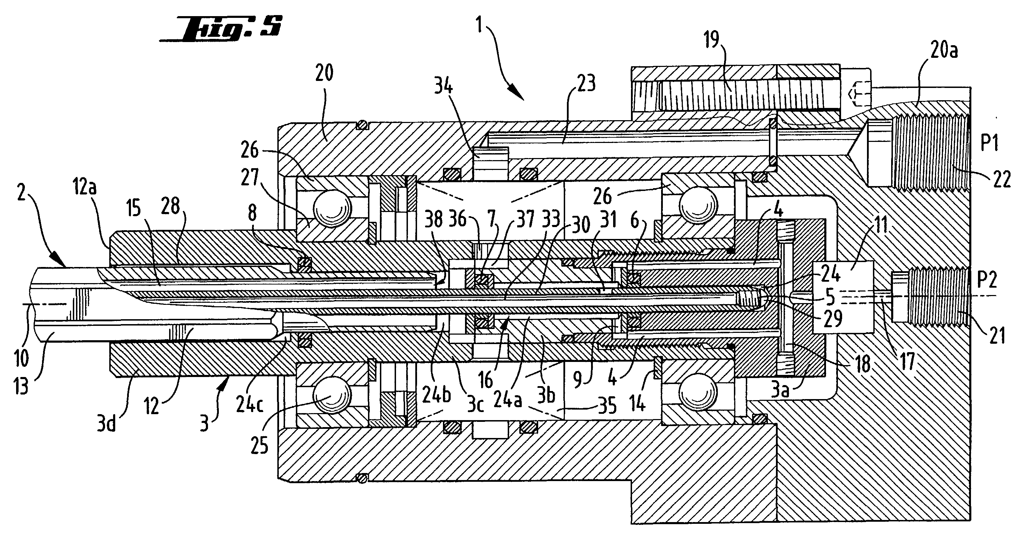

Bei der Beschreibung der Figur 1 wird gleichzeitig auch auf die Figuren 4 und 5 Bezug genommen.

Die Drehdurchführung 1 besteht im wesentlichen aus einem im vorliegenden Fall zweiteiligen feststehenden Gehäuse 20 mit Deckel 20a. Gehäuse 20 und Deckel 20a sind durch Schrauben 19 miteinander verbunden. Im Deckel 20a sind Anschlüsse 21 und 22 für die Zufuhr von Medien unter einem Druck P2 bzw. P1 vorgesehen. Der Anschluß 21 bildet eine zentrale Zuführung, der Anschluß 22 eine dezentrale Zuführung. Konkret ist der Zentralanschluß 21 für das Zuführen von Schmiermittel in sehr geringen Mengen vorgesehen, während durch den Anschluß 22 Druckluft zugeführt wird.

Das zweite wesentliche Element der Drehdurchführung 1 neben dem äußeren, feststehenden Gehäuse 20 ist der innere, drehbare Teil 3, der im wesentlichen vier Teilbereiche 3a, 3b, 3c und 3d aufweist. Die für die Erfindung wesentlichen Aspekte sind vor allem in den Rohrabschnitten bzw. Teilbereichen 3a und 3b des drehenden Teiles 3 zu finden. Der drehbare Teil 3 ist über Kugellager 25 um die zentrale Achse 10 drehbar gelagert, wobei der jeweilige Außenring 26 fest mit der Innenwand des Gehäuses 20 verbunden ist und der Innenring 27 fest mit dem Teilbereich 3c. Die Kugellager 25 sind durch Sicherungsringe 14 positioniert.

Der abgedichtete Übergang vom feststehenden Gehäuse 20 bzw. vom Deckel 20a zum drehenden Teil 3 wird gebildet durch eine nicht näher beschriebene Drehübergangsdichtung 11, die zum Beispiel Gleitdichtflächen aufweist und die nur schematisch angedeutet ist.

Das drehbare Teil 3 weist, wie Figur 1 zeigt, eine zentrale Bohrung auf, die als vierstufige Stufenbohrung ausgebildet ist mit einer vorderen Bohrung 24, den mittleren Bohrungen 24a und 24b sowie der hinteren Bohrung 24c. Die hintere Bohrung 24c weist zudem einen Innensechskant 28 auf. Die Stufenbohrungen 24 bis 24c sind den jeweiligen Teilbereichen 3a bis 3d zugeordnet. An den Übergängen der Teilbereiche von 3a zu 3b sowie 3b zu 3c und 3c zu 3d sind Dichtungen 6, 7 und 8 vorgesehen. Die Begriffe "vom" und "hinten" sind im Rahmen der vorliegenden Beschreibung so zu verstehen, daß mit "vom" die in den Figuren 1, 2, 4 und 5 jeweils rechts liegenden Elemente der einzelnen Teile bezeichnet werden, während mit "hinten" die linksseitigen Enden der jeweiligen Teile bezeichnet werden.

Der Anschluß 21, als zentrale Fluidzuführung, ist durch die Bohrung 17 und die Drehübergangsdichtung 11 mit der Radialbohrung 18 verbunden. Eine weitere Radialbohrung 9 ist am oberen Ende der mittleren Bohrung 24a angeordnet, wobei die Verbindung zur Radialbohrung 18 durch parallel zur vorderen Bohrung 24 verlaufende Kanäle 4 hergestellt wird.

Wie die Zeichnung der Figur 1 weiterhin zeigt, ist die vordere Bohrung 24 als Sackbohrung ausgebildet und im geschlossenen Endbereich mit einer Druckentlastungsbohrung 29 versehen, deren Zweck später noch erläutert wird.

Im folgenden wird die Zugstange 2 gemäß Figur 2 beschrieben.

Die Zugstange 2 ist ebenfalls stufenförmig ausgebildet und so bemessen, daß sie in die zentrale Stufenbohrung des drehbaren Teils 3 einführbar und axial in diesem bewegbar ist. In der linken Hälfte zeigen die Zeichnungen die Zugstange 2 jeweils im Schnitt.

Die Zugstange 2 besteht aus einem Medienübergaberohr 30, welches in einem Außenrohr 12 konzentrisch angeordnet ist und einen Außensechskant 13 aufweist. Das fest mit dem Außenrohr 12 verbundene Medienübergaberohr 30 ist, wie Figur 3 zeigt, mittig in diesem angeordnet, so daß sich ein Ringraum 15 ergibt. Zwischen dem oberen geschlossenen Ende 5 des Medienübergaberohres 30 und dem oberen Ende 12a des Außenrohres 12 ist etwa mittig in der Wandung 30 des Medienübergaberohres 30 eine radiale Bohrung 31 angeordnet.

Wie Figur 4 zeigt, entspricht der überstehende Bereich 30b des Medienübergaberohres 30 der Gesamtlänge der Bohrungsabschnitte 24 und 24a bzw. der Teilbereiche 3a und 3b, d.h. daß der über das Außenrohr 12 überstehende Endbereich 30b des Rohres 30 mindestens um den
axialen Bewegungsweg der Zugstange 2 größer ist als der axiale Abstand zwischen den Dichtungen 6, 7.

Anhand der Figuren 4 und 5, die zwei unterschiedliche Betriebsstellungen der Zugstange 2 zeigen, wird die Funktion und Arbeitsweise der Vorrichtung zum Überführen eines Fluids näher erläutert.

Der Überstand 30b des Medienübergaberohres 30 und der axiale Abstand zwischen den Dichtungen 6, 7 sind so bemessen, daß der das Rohr 30 umgebende Ringraum 16 im mittleren Bereich 3b durch die Dichtungen 6, 7 abgedichtet ist.

In der vorderen Bohrung 24 ist das Medienübergaberohr 30 der Zugstange 2 im wesentlichen dicht geführt. Im Betrieb der Vorrichtung dreht sich die gesamte Zugstange 2 gemeinsam mit dem drehbaren Teil 3.

Das Fluid tritt vom Anschluß 21 durch die zentrale Bohrung 17 sowie durch die Drehdurchführung 11 hindurch und anschließend in die Radialbohrung 18 und von dort in die Kanäle 4.

Figur 4 zeigt die "gelöste" Endstellung der Zugstange 2 in der Bohrung 24, während Figur 5 die "gespannte" Endstellung der Zugstange 2 in der Bohrung 24 zeigt. Wie man sieht, ist die radiale Bohrung 31 in dem Rohr 2 so angeordnet, daß sie, gleich in welchem Betriebszustand, "gelöst" oder "gespannt", immer zwischen den Dichtungen 6 und 7, d.h. im Bereich 3b der mittleren Bohrung 24b bleibt. Schmiermittel, Öl oder ein sonstiges Fluid, welches sich im Ringraum 16 befindet, kann in jeder beliebigen Stellung zwischen diesen beiden Endstellungen durch die Bohrung 31 in die Innenbohrung 33 des Rohres 2 einströmen oder umgekehrt.

Was jedoch in diesem Zusammenhang besonders zu beachten ist, ist die Tatsache, daß sich das gesamte Volumen aller Ölzufuhrleitungen, ausgehend von der Zuführung 21 über die Bohrungen 17, 18, 4 und 9, dem Ringraum 16, die Bohrung 31 einschließlich der Innenbohrung 33 des Rohres 2 nicht verändert, wenn das Rohr 2 zwischen seinen in den Figuren 4 und 5 dargestellten Endpositionen bewegt wird.

Weil sich das obere, geschlossene Ende 5 des Rohres 2 in dem Ringraum 16 des Teilbereiches 24a im wesentlichen wie ein Kolben in einem Zylinder bewegt, ist eine Druckentlastungsbohrung 29 vorgesehen. Diese stellt eine Verbindung der Bohrung 24 zur äußeren Umgebung her, so daß sich beim Bewegen des an seinem Ende 5 geschlossenen Rohres 2 im Ringraum 16 der Bohrung 24a oder der Bohrung 24 (Figur 5) weder ein Druck aufbauen kann noch ein Unterdruck entsteht. Die Dichtungen 6, 7 sorgen hierbei für eine sichere Abdichtung des mit Schmiermittel gefüllten Ringraumes 16 gegenüber der Bohrung 24 und 24b.

Weil sich, wie beschrieben, das Volumen des gesamten zentralen Zuführungssystems während der axialen Bewegung der Zugstange 2 nicht verändert, können auch keinerlei Luft- oder Gasblasen in diesem Zuführungssystem entstehen, und eine kontinuierliche Schmierstoffzufuhr ist damit sichergestellt.

Parallel zu der zentralen Ölzufuhr durch den Anschluß 21 ist auch eine Luftzufuhr radial außerhalb hiervon vorgesehen. Diese Luftzufuhr erfolgt über den Anschluß 22, den sich daran anschließenden axial verlaufenden Kanal 23 und den Ringkanal 34. Der Ringkanal 34 steht in Verbindung mit einem weiteren, ebenfalls nur schematisch angedeuteten Drehdurchführungselement 35. Von diesem gelangt die Druckluft in die im drehenden Teil 3 angeordnete radiale Bohrung 36, den axialen Ringraum 37 im Teilbereich 24a in die Bohrung 24b. Das Außenrohr 12 ist stirnseitig bei 38 offen, so daß die in der Bohrung 24b geführte Druckluft (oder auch ein anderes Fluid) stirnseitig bei 38 in das Außenrohr 12 eintreten und durch den Ringraum 15 weiter nach hinten an ihren Bestimmungsort, eine nicht dargestellte Mischdüse, geleitet werden kann. Die Dichtung 8 dichtet hierbei das Außenrohr 12 gegenüber der Bohrung 24c ab. Die Länge diese Abschnittes, die Position der Dichtung 8 und der Überstand 30b des Rohres 2 gegenüber dem Außenrohr 12 sind dabei so bemessen, daß das offene Ende 38 des Außenrohres 12 immer, daß heißt auch in beiden axialen Endstellungen der Zugstange 2, in dem Teilabschnitt 24c oberhalb der Dichtung 8 liegt.

Der Sechskant 13 greift bezüglich der Drehrichtung kraft- und formschlüssig in den entsprechenden Innensechskant 28 des Teilbereiches 3c ein und stellt dadurch die gemeinsame Drehung des drehenden Teiles 3 mit der Zugstange 2 sicher. Gleichzeitig sind diese Sechskante 13, 28 in ihrer Länge so bemessen, daß sie in beiden axialen Endpositionen der Zugstange 2 in formschlüssigem Eingriff miteinander bleiben.

### Bezugszeichenliste

- 1: Drehdurchführung
- 2: Zugstange
- 3: drehbarer Teil
- 3a: Teilbereich
- 3b: Teilbereich
- 3c: Teilbereich
- 3d: Teilbereich
- 4: Kanal
- 5: geschlossenes Ende
- 6: Dichtung
- 7: Dichtung
- 8: Dichtung
- 10: zentrale Achse
- 11: Drehdurchführung
- 12: Außenrohr
- 13: Außensechskant
- 14: Sicherungsringe
- 15: Ringraum
- 16: Ringraum
- 18: Radialbohrung
- 19: Schrauben
- 20: Gehäuse, fest
- 20a: Deckel
- 21: Anschluß P2
- 22: Anschluß P1
- 23: Kanal axial
- 24: Bohrung vorn
- 24a: Bohrung Mitte.
- 24b: Bohrung Mitte
- 24c: Bohrung hinten
- 25: Kugellager
- 26: Außenring
- 27: Innenring
- 28: Innensechskant
- 29: Druckentlastungsbohrung
- 30: Medienübergaberohr
- 30a: Wandung
- 30b: Endbereich (Länge)
- 31: radiale Bohrung
- 33: Innenbohrung
- 34: Ringkanal
- 35: Drehdurchführungselement
- 36: radiale Bohrung
- 37: axialer Ringraum
- 38: Öffnung (von 12)
- P1: Druckluft
- P2: Schmiermittel

## Patentansprüche

1. Vorrichtung, die ein Fluid von einem stehenden (20) in ein drehendes Maschinenteil (3) mittels einer Drehdurchführung (1) überführt, die wahlweise ebene radiale, konische oder zylindrische Übergangsflächen aufweist, wobei an dem drehenden Maschinenteil (3) eine sich mit diesem drehende, mindestens teilweise rohrförmig ausgebildete Zugstange (2) für die Hindurchleitung des Fluids vorgesehen ist, welche sich in den Bereich der Drehdurchführung (1) erstreckt und welche bezüglich der Drehdurchführung (1) axial verschiebbar ist, **dadurch gekennzeichnet, daß** der drehenden Übergangsfläche der Drehdurchführung (1) ein Rohrabschnitt (3a, 3b) zugeordnet ist, welcher mit radialem Spiel koaxial zur Zugstange (2) des drehenden Maschinenteiles (3) angeordnet ist und mit dieser in axialer Richtung um einen Betrag überlappt, der größer ist als die im Gebrauch der Vorrichtung maximal auftretende axiale Verschiebung der drehenden Zugstange (2) relativ zu dem mitdrehenden Rohrabschnitt (3a, 3b) wobei das radial äußere der beiden Rohrelemente, nämlich die Zugstange bzw. der Rohrabschnitt (2; 3a, 3b), in seiner Wand mindestens einen im wesentlichen axial verlaufenden Fluidüberführungskanal (4) hat und wobei das innere der beiden Rohrelemente (2; 3a, 3b) an seinem in das äußere Rohrelement (3a, 3b) hineinragenden Ende (5) geschlossen ist, daß in dem Überlappungsbereich zwei Dichtungen (6, 7) zwischen der Zugstange (2) und dem Rohrabschnitt (3a, 3b) in einem axialen Abstand zueinander vorgesehen sind, der ebenfalls größer ist als die erwähnte maximale relative Axialverschiebung, daß im Bereich zwischen den Dichtungen (6, 7) sowohl der Rohrabschnitt (3a, 3b) als auch die Zugstange (2) je eine Bohrung (31, 9) für den Hindurchtritt des Fluids entweder von dem axialen Kanal (4) des radial äußeren Rohrelementes oder von dem Innenraum (33) des inneren Rohrelementes in den zwischen diesen Rohrelementen (2; 3a, 3b) durch das radiale Spiel gebildeten Zwischenraum (24a) und von dort in das jeweils andere Rohrelement (2; 3a, 3b) aufweisen.

2. Vorrichtung nach Anspruch 1, **dadurch gekennzeichnet, daß** im Überlappungsbereich der Innendurchmesser des Rohrabschnittes (3a, 3b) größer ist als der Außendurchmesser der Zugstange (2) in mit dem Rohrabschnitt (3a, 3b) überlappenden Bereich.

3. Vorrichtung nach Anspruch 2, **dadurch gekennzeichnet, daß** die Zugstange (2) ein Innen- bzw. Medienübergaberohr (30) und ein Außenrohr (12) aufweist, wobei das Innenrohr (30) axial im Abstand zu seinem mit dem Rohrabschnitt (3a, 3b) überlappenden Endbereich (30b) von dem Außenrohr (12) umgeben und mit diesem fest verbunden ist.

4. Vorrichtung nach Anspruch 3, **dadurch gekennzeichnet, daß** das Außenrohr (12) im Abstand zu seinem offenen Ende (38) einen Außensechskant (13) aufweist, wobei der Abstand mindestens dem maximalen axialen Bewegungsweg der Zugstange (2) entspricht.

5. Vorrichtung nach Anspruch 3 oder 4, **dadurch gekennzeichnet, daß** das Medienübergaberohr (30) und das Außenrohr (12) Teil einer Spindel einer Werkzeugmaschine sind.

6. Vorrichtung nach Anspruch 5, **dadurch gekennzeichnet, daß** das Medienübergaberohr (30) und das Außenrohr (12) eine Zugstange (2) für die Betätigung eines Spannfutters der Werkzeugmaschine bilden.

7. Vorrichtung nach einem der Ansprüche 1 bis 6, **dadurch gekennzeichnet, daß** der drehende Maschinenteil (3) aus mehreren Teilbereichen (3a, 3b, 3c, 3d) besteht.

8. Vorrichtung nach Anspruch 4, **dadurch gekennzeichnet, daß** der drehende Maschinenteil (3) an seinem äußeren Ende einen Innensechskant (28) aufweist.

## Claims

1. An arrangement which transfers a fluid from a stationary part (20) of a machine into a rotating part (3) of the machine by means of a rotary ducting assembly (1) which has optionally flat radial, conical or cylindrical transitional surfaces, wherein provided on the rotating part (3) of the machine is a draw bar (2) which is of an at least partially tubular configuration and which rotates therewith, for passing through the fluid, the draw bar extending into the region of the rotary ducting assembly (1) and being axially displaceable with respect thereto, **characterised in that** associated with the rotating transitional surface of the rotary ducting assembly (1) is a tube portion (3a, 3b) which is arranged with radial play coaxially with respect to the draw bar (2) of the rotating part (3) of the machine and overlaps therewith in the axial direction by an amount which is greater than the axial displacement, which occurs at a maximum in use of the arrangement, of the rotating draw bar (2) relative to the tube portion (3a, 3b) rotating therewith, wherein the radially outer one of the two tube elements, namely the draw bar and the tube portion (2; 3a, 3b) respectively has in its wall at least one substantially axially extending fluid transfer passage (4) and wherein the inner one of the two tube elements (2; 3a, 3b) is closed at its end (5) which projects into the outer tube element (3a, 3b), that provided in the overlap region are two seals (6, 7) between the draw bar (2) and the tube portion (3a, 3b) disposed at an axial spacing relative to each other which is also greater than the aforesaid maximum relative axial displacement, and that in the region between the seals (6, 7) both the tube portion (3a, 3b) and also the draw bar (2) each have a respective bore (31, 9) for the fluid to pass therethrough either from the axial passage (4) of the radially outer tube element or from the internal space (33) of the inner tube element into the intermediate space (24a) formed between those tube elements (2; 3a, 3b) by the radial play and from there into the respective other tube element (2; 3a, 3b).

2. An arrangement according to claim 1 **characterised in that** in the overlap region the inside diameter of the tube portion (3a, 3b) is larger than the outside diameter of the draw bar (2) in a region overlapping with the tube portion (3a, 3b).

3. An arrangement according to claim 2 **characterised in that** the draw bar (2) has an inner or medium-transfer tube (30) and an outer tube (12), wherein the inner tube (30) is surrounded axially at a spacing relative to its end region (30b) which overlaps with the tube portion (3a, 3b) by the outer tube (12) and is fixedly connected thereto.

4. An arrangement according to claim 3 **characterised in that** the outer tube (12) has an outside hexagon (13) at a spacing relative to its open end (38), wherein the spacing corresponds at least to the maximum axial travel movement of the draw bar (2).

5. An arrangement according to claim 3 or claim 4 **characterised in that** the medium-transfer tube (30) and the outer tube (12) are parts of a spindle of a machine tool.

6. An arrangement according to claim 5 **characterised in that** the medium-transfer tube (30) and the outer tube (12) form a draw bar (2) for the actuation of a chuck of the machine tool.

7. An arrangement according to one of claims 1 to 6 **characterised in that** the rotating part (3) of the machine comprises a plurality of portions (3a, 3b, 3c, 3d).

8. An arrangement according to claim 4 **characterised in that** the rotating part (3) of the machine has a hexagonal recess (28) at its outer end.

## Revendications

1. Dispositif qui transfère un fluide d'une partie de machine fixe (20) dans une partie de machine tournante (3) par un passage tournant (1) qui présente au choix des surfaces de transfert radiales, coniques ou cylindriques, dispositif dans lequel il est prévu au niveau de la partie de machine tournante (3) une barre de traction (2) tournant conjointement avec ladite partie de machine tournante et de forme au moins partiellement tubulaire en vue de laisser passer le fluide, laquelle barre de traction s'étend dans la région du passage tournant (1) et est apte à se déplacer axialement par rapport au passage tournant (1), **caractérisé en ce que** la surface de transfert en rotation du passage tournant (1) est associée à une portion de tube (3a, 3b) qui est agencée avec un jeu radial coaxialement à la barre de traction (2) de la partie de machine tournante (3) et qui est dans une relation de recouvrement avec cette barre de traction dans une direction axiale d'une valeur qui est supérieure au déplacement de la barre de traction tournante (2), maximal lorsque l'on utilise le dispositif, par rapport à la portion de tube (3a, 3b) tournant conjointement, celui des deux éléments tubulaires qui est radialement plus extérieur, c'est-à-dire la barre de traction resp. la portion de tube (2 ; 3a, 3b), comportant dans sa paroi au moins un canal de transfert de fluide s'étendant sensiblement axialement et celui des deux éléments tubulaires (2 ; 3a, 3b) qui est radialement plus extérieur étant fermé à son extrémité (5) saillant dans l'élément tubulaire (3a, 3b) extérieur, **en ce qu'**il est prévu dans la région de recouvrement, entre la barre de traction (2) et la portion de tube (3a, 3b), deux garnitures d'étanchéité (6, 7) séparées axialement d'une distance qui est également supérieure au déplacement axial relatif maximal, et **en ce que**, dans la région entre les garnitures d'étanchéité (6, 7), aussi bien la portion de tube (3a, 3b) que la barre de traction (2) comportent chacune un perçage (31, 9) permettant le passage du fluide soit du canal axial (4) de l'élément tubulaire extérieur soit de l'espace intérieur (33) de l'élément tubulaire intérieur à l'espace intermédiaire formé entre ces éléments tubulaires (2 ; 3a, 3b) par le jeu radial puis à l'autre des éléments tubulaires (2 ; 3a, 3b).

2. Dispositif selon la revendication 1, **caractérisé en ce que** dans la région de recouvrement le diamètre intérieur de la portion de tube (3a, 3b) est supérieur au diamètre extérieur de la barre de traction (2) dans la région de recouvrement avec la portion de tube (3a, 3b).

3. Dispositif selon la revendication 2, **caractérisé en ce que** la barre de traction (2) comporte un tube de transfert de fluide resp. intérieur (30) et un tube extérieur (12), le tube intérieur (30) étant entouré axialement par le tube extérieur (12) à distance de sa région d'extrémité (30b), qui est dans une relation de recouvrement avec la portion de tube (3a, 3b), et est relié fixe audit tube extérieur (12).

4. Dispositif selon la revendication 3, **caractérisé en ce que** le tube extérieur (12) comporte à distance de son extrémité ouverte (38) une pièce hexagonale extérieure (13), la distance correspondant au moins au trajet de déplacement axial maximal de la barre de traction (2).

5. Dispositif selon la revendication 3 ou 4, **caractérisé en ce que** le tube de transfert de fluide (30) et le tube extérieur (12) font partie d'une broche d'une machine-outil.

6. Dispositif selon la revendication 5, **caractérisé en ce que** le tube de transfert de fluide (30) et le tube extérieur (12) forment une barre de traction (2) destinée à actionner un mandrin de serrage de la machine-outil.

7. Dispositif selon l'une des revendications 1 à 6, **caractérisé en ce que** la partie de machine tournante (3) se compose de plusieurs sous-régions (3a, 3b, 3c, 3d).

8. Dispositif selon la revendication 4, **caractérisé en ce que** la partie de machine tournante (3) comporte à son extrémité extérieure une pièce hexagonale intérieure (28).
